# EUROPEAN PATENT SPECIFICATION

(11) **EP 3 448 222 B1**
(45) Date of publication and mention of the grant of the patent: **07.06.2023**
(21) Application number: 17718788.7
(22) Date of filing: 13.04.2017
(51) Int. Cl.: A47L 15/00, A47L 15/24, A47L 15/42

(54) **CONVEYOR DISHWASHER AND METHOD FOR OPERATING A CONVEYOR DISHWASHER**
TRANSPORTSPÜLMASCHINE UND VERFAHREN ZUM BETRIEBEN EINER RANSPORTSPÜLMASCHINE
LAVE-VAISSELLE À BANDE TRANSPORTEUSE ET PROCÉDÉ D'UTILISATION D'UN LAVE-VAISSELLE À DISPOSITIF À BANDE TRANSPORTEUSE

(30) Priority: 28.04.2016 DE 102016107872
(43) Date of publication of application: 06.03.2019
(73) Proprietor: Illinois Tool Works Inc., Glenview, IL 60025 (US)
(72) Inventor: DISCH, Harald, 79215 Elzach (DE); SCHREMPP, Martin, 77781 Biberach (DE)
(74) Representative: Meissner Bolte Partnerschaft mbB
(86) International application number: PCT/US2017/027354
(87) International publication number: WO 2017/189244

(56) References cited:
- EP-A1- 2 215 953
- EP-A2- 2 105 081
- DE-A1-102014 208 813
- KR-A- 20100 058 320
- US-A- 4 326 551

## Description

The present invention relates to a conveyor dishwasher adapted to recover thermal energy from a waste output of the machine and to transfer some of that thermal energy to final rinse liquid.

Accordingly, the invention relates, in particular, to a conveyor dishwasher having a conveying apparatus for conveying washware through the individual treatment zones of the conveyor dishwasher, wherein the conveyor dishwasher has at least one wash zone in which wash liquid from a wash tank which is associated with the at least one wash zone is sprayed onto the washware. The conveyor dishwasher further has at least one final rinse zone which is arranged downstream of the at least one wash zone as seen in the conveying direction of the washware and in which final rinse liquid is sprayed onto the washware. Over and above this, the conveyor dishwasher has a waste air system for discharging waste air from the conveyor dishwasher.

A conveyor dishwasher according to the present invention is, in particular, a belt conveyor dishwasher or a basket conveyor dishwasher.

A conveyor dishwasher of the type mentioned in the introduction is disclosed, in principle, in the prior art and is conventionally used in the commercial sector. In contrast to so-called stationary rack machines where the washware to be cleaned remains stationary in the machine during cleaning, in the case of conveyor dishwashers the washware is conveyed through different treatment zones of the conveyor dishwasher.

A conveyor dishwasher conventionally comprises as treatment zones at least one pre-wash zone and at least one main wash zone which, as seen in the conveying direction of the washware, is arranged downstream of the pre-wash zone(s). As seen in the conveying direction, at least one final rinse zone is arranged, as a rule, downstream of the pre-wash zone(s).

It is also known to provide at least one other rinsing zone or rather pre-rinse zone between the main wash zone and the final rinse zone. As seen in the conveying direction of the washware, the washware, which is either received directly on a conveyor belt or is held by means of wash baskets, conventionally runs through an inlet tunnel, the connecting pre-wash zone(s), main wash zone(s), rinsing zone(s) which are provided where applicable, final rinse zone(s) and a drying zone into an outlet section.

The named wash zones (pre-wash zone, main wash zone and rinse zones which are provided where applicable) of the conveyor dishwasher have in each case assigned thereto a wash system which comprises a wash pump and a line system which is connected to the wash pump and by means of which wash liquid is supplied to corresponding spray nozzles of the wash zone. The wash liquid, which is supplied to the spray nozzles, is sprayed in the respective wash zone onto the washware which is conveyed through the respective wash zones by a conveying device of the conveyor dishwasher.

Each wash zone has associated therewith a wash tank in which sprayed liquid is received and/or in which liquid is prepared for the spray nozzles of the relevant zone.

In the case of conveyor dishwashers which are disclosed in the prior art, final rinse liquid in the form of fresh water, which can be pure or mixed with further additives, such as, for example, rinse aid, is sprayed onto the washware by means of the spray nozzles of the final rinse zone. At least a portion of the sprayed final rinse liquid is conveyed from treatment zone to treatment zone in opposition to the conveying direction of the washware by means of a cascade system.

The sprayed final rinse liquid is collected in a tank (rinse tank) of the rinse zone, from which it is conveyed to the spray nozzles (rinse nozzles) of the rinse zone by means of the wash pump of the wash system associated with the rinse zone. In the rinse zone, wash liquid is rinsed from the washware. The liquid which is produced in this connection flows into the wash tank of the at least one main wash zone which is connected upstream of the rinse zone as seen in the conveying direction of the washware. Here, the liquid is conventionally provided with a detergent and is sprayed onto the washware by means of the nozzles (wash nozzles) of the main wash zone by means of a pump system which is associated with the wash system of the main wash zone.

From the wash tank of the main wash zone, the liquid then flows - insofar as no further main wash zone is provided - into the pre-wash tank of the pre-wash zone. The liquid in the pre-wash tank is sprayed onto the washware via the pre-wash nozzles of the pre-wash zone by way of a pump system which is associated with the wash system of the pre-wash zone in order to remove coarse contaminants from the washware.

In the commercial washing sector, there are various standards or rather guidelines in which the requirements regarding the hygiene rating of cleaning processes and the procedure tests thereof are defined. Common to all the standards or rather guidelines is that during the cleaning processes minimum temperatures are prescribed in the wash and/or rinse zones of commercial dishwashers. Amongst other things, thermal disinfection of the washware is to be effected at least in part in this manner.

The consequence of the requirements with regard to the prescribed minimum temperatures in the relevant treatment zones of the conveyor dishwasher is that relatively large amounts of energy have to be expended in the operation of the commercial dishwasher in order to heat the wash or rinse liquids to the required minimum temperatures. Apart from this, in the case of currently known conveyor dishwashers up to 55% of the energy used in the operation of the conveyor dishwasher is output as heat loss. This is effected, among other things, as a result of steam clouds (vapor), moisture and hot air being generated unavoidably during the operation of the conveyor dishwasher, the steam clouds, in particular, having to be removed from the conveyor dishwasher machine at least in part as waste air by means of a waste air system. The waste air system has to be designed, in this case, to remove at least a large portion of the waste air generated during the operation of the conveyor dishwasher from the installation room of the conveyor dishwasher to the outside in order to be able to prevent, in an effective manner, the moisture content of the air in the installation room (ambient air) being increased so much that unwanted condensation from water vapor is produced, in particular, on cool boundary surfaces in the installation room. It must be taken into account, in this connection, that depending on the conveyor dishwasher, a quantity of waste air of between 150 and 800 m³/h is produced per machine.

It is already known from document DE 10 2011 086 593 A1 to associate a heat exchanger unit having a heat exchanger which is cooled with water, in particular fresh water, with the waste air system of a conveyor dishwasher in order to transfer thermal energy from at least a portion of the waste air which is to be discharged from the conveyor dishwasher by means of the waste air system to the cooling water of the heat exchanger which is associated with the waste air system and consequently to reduce the heat loss which is produced during the operation of the conveyor dishwasher.

Even when at least a portion of the thermal energy of the waste air which is to be discharged from the machine can be recovered by way of said measure, it should be noted that up to approximately 30% of the energy used to operate a commercial conveyor dishwasher is also output to the waste water as heat loss. In the case of a typical conveyor dishwasher, the energy loss through the waste water - depending on the configuration and size of the machine - is approximately between 5 and 15 kWh per hour run time. As a rule, the temperature of the waste water, in this case, is between 40 and 75°C, depending on the configuration and model of the machine.

Unlike stationary rack machines, such as, for example, cover-type or under-counter dishwashers, there is currently no technology available by way of which the waste water energy of a conveyor dishwasher can be recovered efficiently by suitable heat exchanger systems and returned to the machine again through, for example, the heating of the required rinse liquid.

This is, above all, due to the continuous operation of conveyor dishwashers compared to the batch processes of stationary rack machines: unlike in the case of stationary rack machines, where for each program cycle the same quantity of water is produced as is required as final rinse fresh water, in the case of conveyor dishwashers, in certain operating cycles no water at all or a smaller quantity of waste water is to be discharged than at the same time fresh water is required as final rinse liquid for the final rinse.

If, for example, the conveyor dishwasher is transferred from standstill into an operating mode, the conveyor dishwasher certainly requires fresh water immediately for the final rinse, at this point, however, there is not yet any waste water available from which at least a portion of the thermal energy is able to be recovered in order to heat the fresh water which is required for the final rinse. This is because at the start of the conveyor dishwasher the wash systems and wash lines are first of all filled with wash liquid. Said wash liquid which is required for filling the wash systems and wash lines is removed from the corresponding wash tank of the corresponding wash zone such that the wash liquid level in the corresponding wash tank inevitably drops. Consequently, no waste water which can be utilized, for example, by means of a heat exchanger device for heating the final rinse liquid, is produced at least for the initial period after starting up the conveyor dishwasher. In particular, no waste water runs off via a corresponding waste water overflow until the wash tanks, or rather the first wash tank as viewed in the conveying direction of the washware, are fully topped up or filled up.

The document DE 10 2014 208 813 A1 relates to a conveyor dishwasher that has at least one wash zone in which wash liquid is sprayed onto the washware, at least on final rinse zone in which final rinse liquid is sprayed onto the washware and a waste air system for discharging waste air from the conveyor dish washer. To safe energy and maintain hygiene performance, a waste water heat recovery system is provided for transferring at least a portion of the thermal energy in the waste water from the conveyor dishwasher as useful heat to the final rinse liquid and a waste air heat recovery system is further provided for transferring at least a portion of the thermal energy in the waste air which is discharged or is to be discharged from the conveyor dishwasher as useful heat to at least the final rinse.

The object underlying the invention on the basis of said problem definition is to develop further a conveyor dishwasher of the type named in the introduction to the effect that in the operation of the conveyor dishwasher resources, in particular energy, are able to be saved without negatively influencing the cleaning result and the efficiency of the conveyor dishwasher.

A further object of the present invention is to be seen in providing a corresponding method for operating a conveyor dishwasher.

With regard to the conveyor dishwasher, the object underlying the invention is achieved by the subject matter of independent claim 1, advantageous further developments of the conveyor dishwasher according to the invention being provided in dependent claims 2 to 14.

With regard to the operating method, the object underlying the invention is achieved by the subject matter of independent claim 15.

Accordingly, in the case of a conveyor dishwasher of the type named in the introduction, it is claimed, in particular, according to the invention that said conveyor dishwasher has a waste water heat recovery system for transferring at least a portion of the thermal energy in the waste water of the conveyor dishwasher as useful heat to the final rinse liquid which is to be sprayed in the at least one final rinse zone. Over and above this, the conveyor dishwasher has a waste air heat recovery system for transferring at least a portion of the thermal energy in the waste air which is discharged or is to be discharged from the conveyor dishwasher as useful heat to the final rinse liquid which is to be sprayed in the at least one final rinse zone.

The advantages which are achievable with the solution according to the invention are obvious: by providing a waste air heat recovery system, the energy efficiency of the conveyor dishwasher is optimized as a result of evaporation losses being minimized. It must be noted, in this connection, that in the case of a conventional conveyor dishwasher - depending on the configuration of the machine and the size of the machine - up to approximately 10 to 15 kW energy is "lost" in the operation of the machine through the waste air, i.e. is discharged unutilized with no recovery by means of the machine-side and/or building-side waste air system.

In the case of the conveyor dishwasher according to the invention, however, not only a waste air heat recovery system but also, in addition to this, a waste water heat recovery system is used in order to be able to transfer at least a portion of the thermal energy of the waste water which is produced in the operation of the conveyor dishwasher as useful heat to the final rinse liquid to be sprayed in the at least one final rinse zone. In this case, the knowledge underlying the invention is that up to approximately 30% of the energy which is introduced during the operation of the conveyor dishwasher is output as heat loss to the waste water. As a result of providing a corresponding waste water heat recovery system to which is supplied, as required, wash liquid, and in particular the wash liquid which is produced as waste water in the operation of the conveyor dishwasher, it is possible to recover at least a portion of the thermal energy which is contained in the waste water and to use it for heating the final rinse liquid to be sprayed in the final rinse zone. In this way, resources can be saved during the operation of the conveyor dishwasher, without this having any influence on the cleaning performance or the cleaning quality of the conveyor dishwasher.

Unlike in the case of stationary rack machines where for each program cycle the same quantity of waste water is produced as final rinse liquid is required, in the case of conveyor dishwashers, however, no waste water is produced in certain operating cycles although, however, depending on the load state, fresh water as final rinse liquid can be required at any time for the purposes of the final rinse. For said purpose, the conveyor dishwasher according to the invention has not only the waste water heat recovery system but, in addition, also the waste air heat recovery system in order, also in such situations, to recover at least in part the thermal energy which is usually produced as heat loss during the operation of the conveyor dishwasher and to use it for heating the final rinse liquid which is to be sprayed in the final rinse zone.

With regard to the waste water heat recovery system and the waste air heat recovery system, it is expedient, in particular, to associate with said heat recovery systems at least one heat exchanger which is preferably operated in accordance with the countercurrent principle for transferring in as efficient a manner as possible a large portion of the thermal energy of the waste water or rather of the waste air as useful heat to the final rinse liquid which is to be sprayed in the at least one final rinse zone. In this case, the waste water heat recovery system and the waste air heat recovery system are preferably connected in series in such a way that the final rinse liquid which is to be sprayed in the at least one final rinse zone is heated to a first temperature level in one of the two recovery systems and is then heated to a second higher temperature level in the other of the two recovery systems.

In a preferred realization of the solution according to the invention, it is proposed in the case of waste water heat recovery to use heat pump technology in order to recover in a particularly efficient way at least a portion of the energy which is stored in the waste water which is to be discharged from the conveyor dishwasher or rather is produced during the operation of the conveyor dishwasher. As a result of transferring energy from the waste water to the refrigerant of the heat pump device, the refrigerant evaporates in an evaporator of the heat pump device. After complete evaporation and superheating in the gaseous state, the refrigerant is then compressed in a heat pump compressor of the heat pump device and brought to a higher pressure and temperature level.

According to one aspect of the solution according to the invention, on the high-pressure side of the heat pump device the thermal energy, which was transferred beforehand from the waste water of the conveyor dishwasher to the refrigerant, is discharged at least in part as useful energy to the final rinse liquid to be sprayed in the at least one final rinse zone. In this connection, the refrigerant of the heat pump device condenses, liquifies and undercools before it expands via an expansion valve of the heat pump device and, as a result, a low pressure level is reached.

As a result of heat pump technology being used for said aspect in the case of the conveyor dishwasher according to the invention, it is possible to suppress or rather clearly to minimize the heat loss from the conveyor dishwasher discharged with the waste water such that the waste water, as a result, is energetically neutral with respect to the temperature of the installation room of the conveyor dishwasher and is able to be supplied directly to the waste water network.

The energy efficiency of the conveyor dishwasher is optimized, in particular, because in the case of the solution according to the invention, a waste air heat recovery system is also used in addition to the waste water heat recovery system, the waste air heat recovery system and the waste water heat recovery system merging together and being used synergistically. To this end, in a preferred realization of the solution according to the invention, the waste air heat recovery system has at least one heat exchanger, which is preferably operated in accordance with the countercurrent principle and serves for the purpose of transferring at least a portion of the thermal energy of the waste air which is to be discharged or is discharged from the conveyor dishwasher as useful heat to the final rinse liquid which is to be sprayed in the at least one final rinse zone of the conveyor dishwasher and to pre-heat this in order then to heat or rather heat further the final rinse liquid to the necessary percentage temperature with the aid of the thermal energy which has been recovered by means of the waste water heat recovery system.

The invention, however, is not restricted to the final rinse liquid which is to be sprayed in the at least one final rinse zone initially being preheated by means of the waste air heat recovery system and then being heated further by means of the waste water heat recovery system. Rather, a different opposite arrangement of the recovery systems is also conceivable and is advantageous in dependence on the application.

Thus, according to a further development of the conveyor dishwasher according to the invention, it is provided that a heat exchanger of the waste air heat recovery system, which is preferably operated countercurrent, is connected energetically upstream of the waste water heat recovery system such that the final rinse liquid, which is to be sprayed in the at least one final rinse zone of the conveyor dishwasher, is initially pre-heated by means of the waste air heat recovery system, the temperature level of the final rinse liquid which is to be sprayed in the at least one final rinse zone then being raised further by means of the waste water heat recovery system. Said arrangement of the waste air heat recovery system and of the waste water heat recovery system can be used, in particular, when heat pump technology is used for the waste water heat recovery system.

According to a further aspect of the present invention, it is provided that heat pump technology is used in each case for both the waste water heat recovery system and for the waste air heat recovery system.

Since - as already indicated - in many situations during the operation of the conveyor dishwasher, no waste water or rather an insufficient quantity of waste water is produced, it is provided in accordance with the invention that said conveyor dishwasher has a waste water pump for supplying wash liquid which is produced as waste water during operation of the conveyor dishwasher, as required, to a heat exchanger of the waste water heat recovery system, in which at least a portion of the thermal energy in the supplied wash liquid is transferred to the final rinse liquid which is to be sprayed in the final rinse zone. In this context, it is expedient, in particular, when a control device of the conveyor dishwasher is realized which is designed to drive the named waste water pump depending on a quantity of final rinse liquid which is currently required for final rinsing during operation of the conveyor dishwasher and/or depending on a quantity of waste water which is produced during the operation of the conveyor dishwasher and/or depending on a previously defined event and/or depending on an operating cycle and/or operating state of the conveyor dishwasher.

If, for example, the conveyor dishwasher is transferred from a standstill into an operating mode, the conveyor dishwasher certainly requires fresh water immediately as final rinse liquid for the final rinse, however at this point no waste water which is available for the purposes of heat recovery has yet been produced. As already stated previously, this is because at the start of the conveyor dishwasher the wash systems and wash lines are first of all filled with wash liquid such that, depending on the amount of the quantity of final rinse liquid supplied per unit time, a certain time is required for topping up the wash tank. Consequently, it is provided in an advantageous further development of the solution according to the invention that the control device only actually switches on the waste water pump when waste water which can be used for heat recovery is produced during the operation of the conveyor dishwasher.

In a further development, it is provided, in particular, that the control device of the conveyor dishwasher is realized to switch off, preferably to switch off automatically, the waste water pump, by means of which, as required, the wash liquid which is produced as waste water in the operation of the conveyor dishwasher is supplied to the heat exchanger device when the liquid level in the wash tank falls below a previously defined or definable level, and to switch the waste water pump on again, preferably to switch it on again automatically, as soon as the liquid level in the wash tank again exceeds a previously defined or definable second level, wherein the first level preferably corresponds to the second level. This is a particularly easily realizable but nevertheless effective way to perform the switching on and off of the waste water pump in dependence on the question of whether any wash liquid at all is produced as waste water in the operation of the conveyor dishwasher.

In said context, it is in particular conceivable to provide the wash tank with a corresponding level sensor by means of which the current liquid level in the wash tank is preferably able to be continuously detected. In dependence on the liquid level at any one time, a decision is then made in the control device as to whether wash liquid is being produced as waste water and whether said wash liquid is able to be supplied to the waste water heat recovery system.

In a further development of the last-named embodiment, the control device is designed, in particular, to determine or rather to estimate the quantity of wash liquid required as wash liquid per unit time and the expected quantity of waste water produced per unit time and, in dependence thereon, to regulate in a corresponding manner the quantity of waste water supplied to the heat recovery device per unit time by means of the waste water pump, in such a manner that a sufficient quantity of wash liquid is always available for the wash process to be performed in the wash zone.

In a particularly preferred further development of the conveyor dishwasher according to the invention, it is provided that the control device is designed to initiate, as required, hot water treatment, which is independent of the heat exchanger device, of the final rinse liquid which is to be sprayed in the final rinse zone. In said context "as required" means, in particular, when it is detected that the thermal energy which has been transferred to the final rinse liquid, which is to be sprayed in the final rinse zone, in the heat exchanger device is not sufficient to heat the final rinse liquid to a previously defined or definable minimum temperature, and/or when no wash liquid is supplied to the heat exchanger device, and/or when the quantity of wash liquid which has been supplied to the waste heat exchanger system per unit time is not sufficient to heat the final rinse liquid to a previously defined or definable minimum temperature. In said cases, a hot water treatment of the final rinse liquid which is to be sprayed in the final rinse zone, which treatment is independent of the heat exchanger device, is initiated preferably automatically by the control device in order to achieve that the final rinse liquid actually sprayed in the final rinse zone has the previously defined or definable minimum temperature such that the hygiene requirements are correspondingly met.

In said context, it is conceivable, in particular, that the hot water treatment which is independent of the heat exchanger device is effected by means of a water heater, such as for example a boiler, said water heater preferably being a component which is associated with the conveyor dishwasher. It is conceivable, for example, for the water heater to be realized so as to heat the final rinse liquid to be sprayed in the final rinse zone to the previously defined or definable minimum temperature by way of electric energy, steam, a heat pump, gas or hot water.

As an alternative to this or in addition to it, however, it is also conceivable for the hot water treatment, which is to be performed as required, of the final rinse liquid which is to be sprayed in the final rinse zone, to be effected outside the conveyor dishwasher. In this connection, it is conceivable, for example, for an external water heater to be provided, for example in the form of a central (building-side) hot water supply. Thus, in this case, the conveyor dishwasher can form or can be able to form a flow connection with said external water heater by means of a corresponding hot water connection for supplying, as required, hot water as the final rinse liquid which is to be sprayed in the final rinse zone. The control device which is associated with the conveyor dishwasher should be realized in said context to activate the hot water connection as required, whenever the thermal energy which is transferred to the final rinse liquid which is to be sprayed in the final rinse zone is not sufficient to heat the final rinse liquid to a previously defined or definable minimum temperature and/or when no wash liquid is supplied to the heat exchanger device, and/or when the quantity of wash liquid which has been supplied to the heat exchanger system per unit time is not sufficient to heat the final rinse liquid which is to be sprayed in the final rinse zone to the previously defined or definable minimum temperature.

In the conveyor dishwasher according to the invention, it is provided that the conveyor dishwasher has a wash system which is associated with the at least one wash zone and has at least one wash pump and wash nozzles, wherein wash liquid from the wash tank can be supplied to the wash nozzles with the aid of the at least one wash pump, and wherein the wash liquid which is sprayed in the at least one wash zone by the wash nozzles at least partially flows back into the wash tank again due to gravity. In other words, according to the invention, it is provided that the wash liquid recirculates in the at least one wash zone.

According to one aspect of the present invention, the intake end of the waste water pump forms a direct flow connection with the wash tank in order to supply the wash liquid, which is produced as waste water, as required, to the heat exchanger device. As already mentioned in said context, in this case the conveyor dishwasher should also be provided, in addition to the heat exchanger device, with a water treatment means which operates independently thereof, for example in the form of a water heater (boiler) which is associated with the conveyor dishwasher in order to be able to ensure sufficient heating of the final rinse liquid which is to be sprayed in the final rinse zone at least whenever wash liquid is not supplied to the heat exchanger device.

According to the invention the conveyor dishwasher has an auxiliary tank which forms a flow connection with the wash tank by means of an overflow or by means of a bypass line, the intake end of the waste water pump forming a direct flow connection with the auxiliary tank. The auxiliary tank should serve, in particular, as a buffer reservoir in order to buffer, as required, the waste water which is produced in the wash zone and is to be discharged from the wash zone or rather from the wash tank of the wash zone.

In particular, the wash liquid which is stored (buffered) in the auxiliary tank and has been produced as waste water in the wash zone, no longer serves as recirculated wash liquid. In other words, the wash system of the at least one wash zone, and in particular the at least one wash pump of the wash system does not form a flow connection with the auxiliary tank.

In the case of said embodiment where an auxiliary tank is provided which is arranged upstream of the wash tank of the (first) wash zone of the conveyor dishwasher as seen in the conveying direction of the washware, the need to provide a water treatment means which is independent of the heat exchanger device does not exist under certain conditions, since as a result of correspondingly dimensioning the auxiliary tank it can always be ensured that, at any time and in any operating situation, in particular also directly during or after starting-up the conveyor dishwasher, waste water is able to be supplied to the heat exchanger device in a sufficient quantity in order to raise the final rinse liquid which is to be sprayed in the final rinse zone to the previously defined or definable minimum temperature.

In practice, it has been shown, in this case, that a capacity of 10 to 50 liters is sufficient for the auxiliary tank so that the conveyor dishwasher can be operated effectively without having a water treatment means which is independent of the heat exchanger device, with the wash tank having a capacity of 20 to 200 liters.

According to a further aspect of the present disclosure, the conveyor dishwasher additionally has a drying air heat recovery system for transferring at least a portion of the thermal energy in the drying air which is circulating in a drying zone of the conveyor dishwasher as useful heat to the final rinse liquid which is to be sprayed in the at least one final rinse zone. It is in particular conceivable, in this connection, when the drying air heat recovery system has at least one heat pump device.

The invention relates not only to a conveyor dishwasher of the type described beforehand, but also to a method for operating such a conveyor dishwasher, at least a portion of the wash liquid which is produced as waste water being supplied at least intermittently to a heat exchanger device in which at least a portion of the thermal energy of the supplied wash liquid is transferred to the final rinse liquid which is to be sprayed in a final rinse zone of the conveyor dishwasher.

Exemplary embodiments of the conveyor dishwasher according to the invention are described in more detail below with reference to the accompanying drawings, in which:
- FIG. 1: shows a schematic representation of a conveyor dishwasher for explaining the general design and method of operation;
- FIG. 2: shows a schematic representation of a first exemplary embodiment of the conveyor dishwasher according to the invention;
- FIG. 3: shows a schematic representation of a further exemplary embodiment of the conveyor dishwasher according to the invention;
- FIG. 4: shows a schematic representation of a further exemplary embodiment of the conveyor dishwasher according to the invention; and
- FIG. 5: shows a schematic representation of a further exemplary embodiment of the conveyor dishwasher according to the invention; and

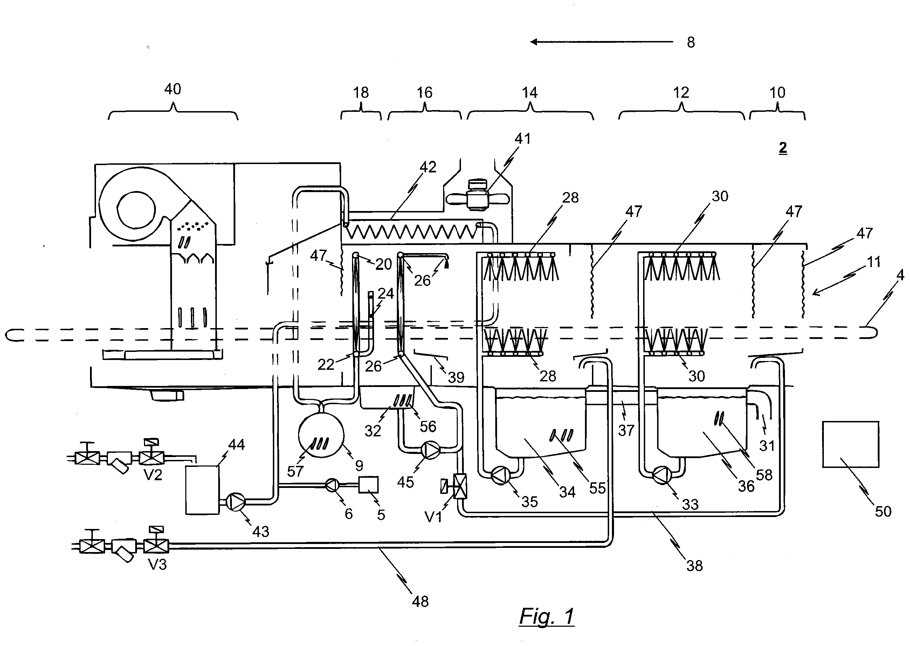

FIG. 1 shows a conveyor dishwasher 2 having a conveying device 4 for conveying washware, which is not shown, in a conveying direction 8 through a conveyor dishwasher 2. The conveyor dishwasher 2 has at least one wash zone, for example as shown in FIG. 1, a pre-wash zone 12 and a main wash zone 14 which, as seen in the conveying direction 8, is arranged downstream of the pre-wash zone 12.

As seen in the conveying direction 8, downstream of the at least one wash zone 12, 14 a rinse zone 16 is arranged and downstream of the rinse zone 16 at least one final rinse zone, for example as shown only one single final rinse zone 18. As seen in the conveying direction 8 of the washware, a drying zone 40 connects to the final rinse zone 18 in the case of the conveyor dishwasher 2 which is shown schematically in FIG. 1. The respective zones 12, 14, 16, 18, 40 of the conveyor dishwasher 2 can be separated from one another by means of partition curtains 47.

In the case of the embodiment shown schematically in FIG. 1, the inlet tunnel 10 is itself also separated from the inlet 11 by means of a partition curtain 47. The provision of the partition curtains 47 prevents any overspraying of wash liquid and final rinse liquid and the escaping of vapors from the conveyor dishwasher 2.

The named treatment zones 12, 14, 16, 18 of the conveyor dishwasher 2 have associated therewith spray nozzles 20, 22, 24, 26, 28, 30. Said spray nozzles 20, 22, 24, 26, 28, 30 serve the purpose of spraying liquid onto the washware when it is conveyed by the conveying device 4 through the respective treatment zones 12, 14, 16, 18. The individual spray systems of the treatment zones 12, 14, 16, 18 ensure that the washware to be treated is sprayed both from the top and from the bottom.

In the case of the conveyer dishwasher 2 shown schematically in FIG. 1, the final rinse zone 18, however, has not only downwardly directed top spray nozzles 20 and upwardly directed bottom spray nozzles 22, but also transversely directed side spray nozzles 24 on each side of the conveying device 4. The use of side spray nozzles 24 enables targeted spraying of the surfaces of the washware (surfaces of the items to be washed) with final rinse liquid even in shadow zones. Precisely in the case of a fully-loaded conveying system, i.e. with the carrier of the items to be washed loaded plate-to-plate, the use of side spray nozzles 24 in the final rinse zone 18 has a clear advantage with reference to the rinse aid result (effective rinsing of detergent residue on the surfaces of the items to be washed even in shadow zones) compared to systems where only top and bottom spray nozzles 20, 22 are provided in the final rinse zone 18 and there are no transversely directed side spray nozzles 24.

The rinse zone 16, main wash zone 14 and pre-wash zone 12 additionally have associated therewith tanks (rinse tank 32, main wash tank 34, pre-wash tank 36) for receiving sprayed liquid and/or for preparing liquid for the spray nozzles 26, 28, 30 of the relevant treatment zones 14, 16, 18.

In the case of the conveyor dishwasher 2 shown schematically in FIG. 1, final rinse liquid, which is composed of fresh water with added rinse aid, is sprayed on the washware (not shown) by means of the spray nozzles 20, 22, 24 of the final rinse zone 18 which are arranged above and below the conveying device 4 and to the side. A portion of the sprayed final rinse liquid is conveyed from treatment zone to treatment zone in opposition to the conveying direction 8 of the washware via a cascade system. The remaining part of the final rinse liquid which is sprayed in the final rinse zone 18 is directed directly via a valve V1 and a bypass line 38 into the pre-wash tank 36 which is associated with the pre-wash zone 12.

In the cascade system, the final rinse liquid, which is sprayed by the final rinse nozzles 20, 22, 24, flows due to gravity from the final rinse zone 18 into the rinse tank 32 which is associated with the rinse zone 16. The final rinse liquid, which is collected by the rinse tank 32 and sprayed in the final rinse zone 18, is then conveyed by means of a rinse pump 45 to the spray nozzles (rinse nozzles 25) of the rinse zone 16. Wash liquid is rinsed off the washware in the rinse zone 16. The liquid (rinse liquid) which is produced in this connection flows due to gravity into the main wash tank 34 which is associated with the main wash zone 14. A drain element 39, for example a drain floor or a baffle which directs the rinse liquid sprayed by the rinse nozzles 26 into the main wash tank 34, is preferably provided for this.

According to another embodiment which is not shown in the drawings, the drain element 39 can be omitted when the main wash tank 34 extends under the rinse nozzles 26 of the rinse zone 16.

The liquid received by the main wash tank 34 of the main wash zone 14 is usually provided with a detergent and is sprayed onto the washware via the spray nozzles (main wash nozzles 28) of the main wash zone 14 by means of a main wash pump 35. The wash liquid which is sprayed by way of the main wash nozzles 28 flows back into the main wash tank 34 due to gravity.

The main wash tank 34 is fluidically connected via an overflow line 37 to the pre-wash tank 36 which is associated with the pre-wash zone 12. The wash liquid which is sprayed in the main wash zone 14 passes into the pre-wash tank 36 by means of said overflow line 37 when a sufficient quantity of wash liquid is received in the main wash tank 34.

The liquid which is received in the pre-wash tank 36 of the pre-wash zone 12 is then sprayed on to the washware via the spray nozzles (pre-wash nozzles 30) of the prewash zone 12 by means of a pre-wash pump 33 in order to remove coarse contaminants from the washware. The wash liquid which is sprayed by way of the pre-wash nozzles 30 flows back into the pre-wash tank 36 due to gravity.

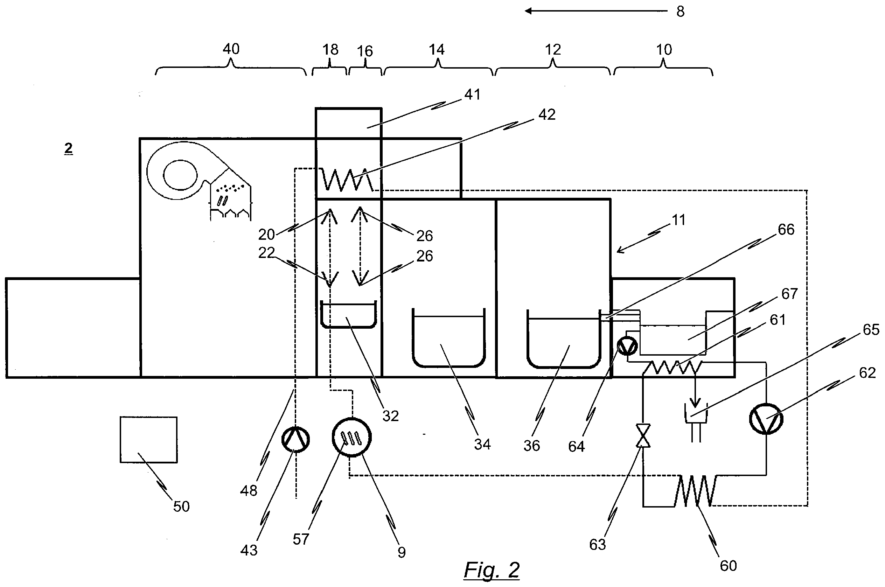

The pre-wash tank 36 is provided with an overflow line 31 which serves for the purpose of supplying the excessive quantity of liquid as waste water to a heat treatment device when a liquid level is exceeded in the pre-wash tank 36. Said aspect will be described in detail subsequently with reference to the representations in figures 2 to 5.

As already indicated, the liquid which is sprayed in the main wash zone 14 and in the pre-wash zone 12 preferably contains detergent which is added, for example, to the liquid which is received in the main wash tank 34 of the main wash zone 14 by means of a detergent-adding device (not shown in the drawings).

The drying zone 40 connects to the final rinse zone 18 as seen in the conveying direction 8 of the washware. The washware is dried with dry, heated air in the drying zone 40 in order to blow off or rather dry off the moisture which is situated on the washware. In order to keep the moisture content of the air within a range that is favorable for drying, it is conceivable, for example, to supply room air to the drying zone 40 from the outside via an opening, for instance through the outlet opening for the washware.

The hot, moist air in the drying zone 40 is then removed out of the drying zone 40 via a further opening, for example by means of a blower 41. In this case, it is advantageous when the waste air flow out of the drying zone 40 passes a device 42 for heat recovery in which, for example, a condenser can be provided. The device 42 for heat recovery serves for the purpose of recovering at least a portion of the heat energy which is contained in the outlet.

When, prior to a first start of the conveyor dishwasher 2, the tanks (pre-wash tank 36, main wash tank 34, rinse tank 32) which are associated with the wash zones 12, 14 and 16 are empty or rather are only insufficiently filled, they have to be filled first of all via a fresh water line 48 and/or by spraying final rinse liquid in the final rinse zone 18. The fresh water line 48 is connectable to a fresh water supply network via a drivable valve V3. The quantity of wash liquid which is available in the main wash zone 14 and in the pre-wash zone 12 can be monitored in each case by means of a level sensor which is provided in the main wash tank 34 or rather by means of a level sensor which is provided in the pre-wash tank 36 and this can be reported to a control device 50.

The final rinse zone 18 can have associated therewith - as shown in FIG. 1 - a fresh water container 44 for buffering at least a portion of the fresh water which is provided for the final rinse. The fresh water container 44 is provided, on the one side, with a fresh water connection, which is connectable to a fresh water supply network via a drivable fresh water supply valve V2, and on the other side is connected to the suction side of a final rinse pump 43. However, it is obviously also conceivable to dispense with a fresh water container 44 for buffering at least a portion of the fresh water which is provided for the final rinse and to connect the fresh water supply valve V2 directly to the suction side of the final rinse pump 43.

Neither is it absolutely necessary to provide a final rinse pump 43. Rather, the pressure from the fresh water supply network can also be used, for example, in order to supply the freshwater, which is to be sprayed in the final rinse zone 18 as final rinse liquid, to the final rinse nozzles 20, 22, 24.

In the case of the conveyor dishwasher 2 which is shown schematically in FIG. 1, in contrast, a final rinse pump 43 is used, the pressure side of which is connected to a water heater 9 ("boiler") via a line system. The line system, in this case, is realized in such a manner that the liquid which is conveyed by the final rinse pump 43 to the spray nozzles 20, 22, 24 of the final rinse zone 18 initially passes at least the device 42 for heat recovery, in which at least a portion of the thermal energy of the waste air which is removed from the conveyor dishwasher is utilized for heating the liquid which is supplied to the spray nozzles 20, 22, 24 of the final rinse zone 18.

As an alternative to this or in addition to it, it is provided that the liquid which is to be conveyed from the final rinse pump 43 to the spray nozzles 20, 22, 24 of the final rinse zone 18 passes a heat exchanger device 60 in which at least a portion of the thermal energy of the waste water which is produced and is to be discharged during the operation of the conveyor dishwasher 2 is transferred to the final rinse liquid which is to be sprayed in the final rinse zone 18. The design and the method of operation of said heat exchanger device 60 will be described in more detail subsequently with reference to the embodiments according to figures 2 to 5.

Rinse aid is added to the fresh water, which is supplied to the final rinse pump 43 either directly from the fresh water supply valve V2 or from the fresh water container 44, by means of a rinse aid dosing device which has a rinse aid pump 6. In a preferred manner, the rinse aid dosing device is arranged in such a manner that the adding of rinse aid to the fresh water is effected at a position at which the fresh water has not yet been heated. Tests have shown in this context that a clearly better and more uniform mixing of the rinse aid with the fresh water is effected when the rinse aid is added into non-heated fresh water.

In particular, the adding of rinse aid should preferably be effected in fresh water which has a temperature of less than 40°C and preferably less than 30°C.

Consequently, in the embodiment of the conveyor dishwasher 2 which is shown schematically in FIG. 1, the adding of the rinse aid takes place between the final rinse pump 43 and the water heater 9 or rather the device 42 for heat recovery and the heat exchanger device 60.

The control device 50 of the conveyor dishwasher 2 is simply indicated schematically in FIG. 1. Several previously defined or definable sequence programs are preferably filed in the control device 50. For this purpose, the control device 50 has a corresponding storage device, this preferably being a random access memory (RAM) in this connection. Each individual sequence program defines the process parameters which are established for the treatment of the washware in the various treatment zones of the conveyor dishwasher 2, in particular also the temperature, in particular minimum temperature of the wash liquid which is to be sprayed in the pre-wash zone 12, of the wash liquid which is to be sprayed in the main wash zone 14, of the liquid which is to be sprayed in the rinse zone 16 and/or of the final rinse liquid which is to be sprayed in the final rinse zone 18.

To this end, it is conceivable when in the pre-wash tank 36 which is associated with the pre-wash zone 12, in the main wash tank 34 which is associated with the main wash zone 14 and/or in the rinse tank 32 which is associated with the rinse zone 16, a corresponding heating device 55, 56, 58 is arranged in order to temper in a corresponding manner the liquid which is collected in the relevant tank 32, 34, 36 according to a selected sequence program. The named heating devices 55, 56, 58 are correspondingly drivable by the control device 50.

In addition, a heating device 57 of the water heater 9 is correspondingly drivable by the control device 50 in order to readjust, as necessary, the temperature, in particular the minimum temperature, of the final rinse liquid to be sprayed in the final rinse zone 18, should the final rinse liquid which is to be sprayed, after passing the device 42 for heat recovery and/or after passing the heat exchanger device 60, not yet be sufficiently tempered.

The heat recovery systems for a first exemplary embodiment of the conveyor dishwasher 2 according to the invention will be described in more detail below with reference to the representations in FIG. 2.

In particular, FIG. 2 describes in more detail a schematic representation of a first exemplary embodiment of a waste water and waste air heat energy recovery system which is used, for example, in the case of the conveyor dishwasher 2 which has been described beforehand and has been shown schematically in FIG. 1.

In particular, it is provided in the case of the embodiment shown schematically in FIG. 2 that the first wash zone (pre-wash zone 12) in the conveying direction 8 of the conveyor dishwasher 2 has associated therewith a waste water heat recovery system with a heat pump device in order to transfer at least a portion of the thermal energy of the waste water which is produced in the operation of the conveyor dishwasher 2 as useful heat to the final rinse liquid to be sprayed in the final rinse zone 18. However, it is obviously also fundamentally conceivable also to provide the waste water heat recovery system in a different position, for example already in a building-side waste water system.

In addition to the waste water heat recovery system, a waste air heat recovery system is used in the case of the exemplary embodiment of the conveyor dishwasher 2 according to the invention. In the case of the exemplary embodiment shown schematically in FIG. 2, the waste air heat recovery system has associated therewith a heat exchanger 42 which is preferably operated in accordance with the countercurrent principle in order to transfer at least a portion of the thermal energy of the waste air which is to be discharged or is discharged in the operation of the conveyor dishwasher 2 as useful heat to the final rinse liquid which is to be sprayed in the final rinse zone 18 of the conveyor dishwasher 2. Although not shown in the drawings, it is also conceivable, in this context, when heat pump technology is also used in the case of the waste air heat recovery system.

As shown in FIG. 2, the waste air heat recovery system and the waste water heat recovery system are connected in series in such a manner that the final rinse zone which is to be sprayed in the at least one final rinse zone 18 is initially heated in the waste air heat recovery system to a first temperature level and then is heated in the waste water heat recovery system to a second higher temperature level.

In particular, in the case of the embodiment shown schematically in FIG. 2, it is provided that the waste air heat recovery system has a heat exchanger 42 which is traversed by fresh water. The fresh water comes from a corresponding fresh water source, in particular from the fresh water network, and preferably flows countercurrent through the heat exchanger 42 of the waste air heat recovery system.

Apart from this, at least a portion of the waste air which is to be discharged or is discharged from the conveyor dishwasher 2 is directed through the waste air heat recovery system and, in this case, outputs at least a portion of the heat energy to the cold fresh water which preferably flows countercurrent. In this case, the fresh water is heated from originally approximately 15°C to preferably approximately 30°C to 45°C whilst at the same time cooling the waste air to approximately 18°C to 25°C. In particular, it is advantageous, in this context, when the waste air heat recovery system is designed to cool the waste air which is to be discharged or is discharged from the conveyor dishwasher 2 in the operation of the conveyor dishwasher 2 to a temperature which corresponds at least approximately to the ambient temperature in the installation room of the conveyor dishwasher 2 such that the waste air which is cooled down in such a manner can then be directed directly into the installation room of the conveyor dishwasher 2 without unwanted condensation being feared at particularly cold points in the installation room.

As indicated schematically in FIG. 2, the fresh water, which has been pre-heated by means of the waste air heat recovery system, is brought to a higher energy level by means of the heat pump device which is associated with the waste water heat recovery system, by at least a portion of the thermal energy of the waste water which is to be discharged from the conveyor dishwasher 2 being transferred via the heat pump device to the fresh water which has been pre-heated in the waste air heat recovery system.

To this end, the heat pump device of the waste water heat recovery system has an evaporator which - as indicated schematically in FIG. 2 - can be arranged at the machine-side inlet or in the vicinity of the first waste water tank as seen in the conveying direction 8. A refrigerant evaporates in the evaporator when the evaporator 61 is flowed around by the hot waste water of the conveyor dishwasher 2.

The refrigerant, which is evaporated in the evaporator 61 of the heat pump device, is compressed by a heat pump compressor 62 after total evaporation by means of superheating in the gaseous state and, in this way, is brought to a higher pressure and temperature level. On the high-pressure side of the compressor 62, the thermal energy, which was received beforehand from the hot waste water, is then output as useful heat or rather heat output to the final rinse liquid (fresh water) in the final rinse zone 18 which has already been pre-heated by means of the waste air heat recovery system.

It must be stressed, in this context, that the thermal energy which has been recovered from the waste water of the conveyor dishwasher 2 is used, in particular, for the further heating of the final rinse liquid which has already been pre-heated by means of the waste air heat recovery system. To this end, the heat pump device has associated therewith a first condenser or rather heat exchanger 60 in order to be able to transfer at least a portion of the thermal energy of the refrigerant as useful heat to the final rinse liquid which is to be sprayed in the at least one final rinse zone 18. In this connection, it is provided, in particular, in the case of the embodiment shown schematically in FIG. 2 that the heat exchanger 42 of the waste air heat recovery system, as seen in the direction of flow of the final rinse liquid which is to be sprayed in the final rinse zone 18, is arranged upstream of the condenser or rather heat exchanger 60 of the heat pump device in order to be able to pre-heat the liquid which is to be sprayed in the final rinse zone 18.

Although not shown in FIG. 2, the solution according to the invention is, however, not restricted to embodiments in which the thermal energy which is recovered from waste water is only used for the further heating of the final rinse liquid which is to be sprayed in the final rinse zone 18. Rather, it is fundamentally conceivable when further condensers or heat exchangers, which are associated with the heat pump device and consequently the waste water heat recovery system, are used. Via said additional condensers or rather heat exchangers, the thermal energy which is recovered from the waste water can be output as heat output to the liquid to be sprayed in the other treatment zones, for example to the liquid to be sprayed in the main wash zone 14.

After passing the condenser or rather heat exchanger 60 and, where applicable, the further condensers or rather heat exchangers, the refrigerant of the heat pump device condenses and undercools before it is expanded via an expansion valve 63 and, as a result, a lower pressure level is achieved again.

As indicated schematically in FIG. 2, the final rinse zone 18 has associated therewith another (alternative) heating device 57, this being, in this connection, in particular, an electrically operated heating device or an additional heating device which is operated with gas or steam and is realized independently of the heat pump device of the waste water heat recovery system and independently of the waste air heat recovery system. With said additional (alternative) heating device 57, thermal energy can be supplied, as required and independently of the heat pump device of the waste water heat recovery system or rather independently of the waste air heat recovery system, to the final rinse liquid which is to be sprayed in the final rinse zone 18 in order to achieve that the final rinse liquid which is to be sprayed in the final rinse zone 18 has a previously defined or definable minimum process temperature of, for example, at least 65°C.

In the case of the embodiment of the waste water energy recovery system which is shown schematically in FIG. 2, a waste water pump 64 is used which is drivable in a corresponding manner by means of the already mentioned control device 50 of the conveyor dishwasher 2. In the case of the embodiment shown in FIG. 2, the suction side of the waste water pump 64 forms an (indirect) flow connection with the wash tank 36 of the first wash zone (pre-wash zone 12) of the conveyor dishwasher 2.

In particular, in the case of the waste water energy recovery system according to FIG. 2, it is provided that that suction side of the waste water pump 64 does not form a direct flow connection with the wash tank 36 of the pre-wash zone 12, but forms or can form a flow connection with an auxiliary tank 67, said auxiliary tank 67 forming a flow connection with the wash tank 36 of the pre-wash zone 12 via an overflow 66 or similar bypass line in such a manner that the wash liquid which is produced as waste water in the pre-wash zone 12 passes into the auxiliary tank 67 and is buffered there.

It is ensured in this way that the wash liquid (waste water) which is stored in the auxiliary tank 67 is no longer able to be recirculated in the pre-wash zone 12 as the suction side of the pre-wash pump 33 of the wash system which is associated with the pre-wash zone 12 is connected to the pre-wash tank 36.

The waste water which is stored in the auxiliary tank 67 is supplied, as required, by means of the waste water pump to the evaporator which is associated with the heat pump device and serves for the purpose of transferring at least a portion of the thermal energy of the wash liquid, which is supplied to the heat pump device as waste water, to the refrigerant of the heat pump device.

By providing such an auxiliary tank 67, it is ensured, in particular, that the heat pump device is always able to be supplied with waste water from the auxiliary tank 67 even when the conveyor dishwasher 2 is started-up, that is to say is in a state in which, in the operation of the conveyor dishwasher 2, no waste water is produced which is to be discharged and is able to be used for heat recovery.

Nevertheless, in the case of the embodiment shown schematically in FIG. 2, hot water processing, which is independent of the waste water heat recovery system and of the waste air heat recovery system, is provided in an advantageous manner in the form of a water heater 9 which is activated by the control device 50 of the conveyor dishwasher 2 at least whenever the thermal energy, which has been transferred in the waste air and waste water heat recovery systems to the final rinse liquid which is to be sprayed in the final rinse zone 18, is not sufficient to heat the final rinse liquid to a previously defined or definable minimum temperature. As already mentioned, it is conceivable, in particular, when the hot water heater is designed to heat the final rinse liquid which is to be sprayed in the final rinse zone 18 to a previously defined or definable minimum temperature using electrical energy, steam, gas or hot water.

In addition, it is indicated schematically in FIG. 2 that a waste water line 65 is used in the waste water heat recovery system in order to supply the wash liquid which has been discharged from the conveyor dishwasher 2 as waste water - once it has passed the heat pump device - to a waste water network.

Although not shown in FIG. 2, it is obviously also conceivable when the suction side of the waste water pump 64 is directly connected, i.e. without an auxiliary tank 67, to the wash tank 36 of the first wash zone (pre-wash zone 12) as seen in the conveying direction 8 of the washware.

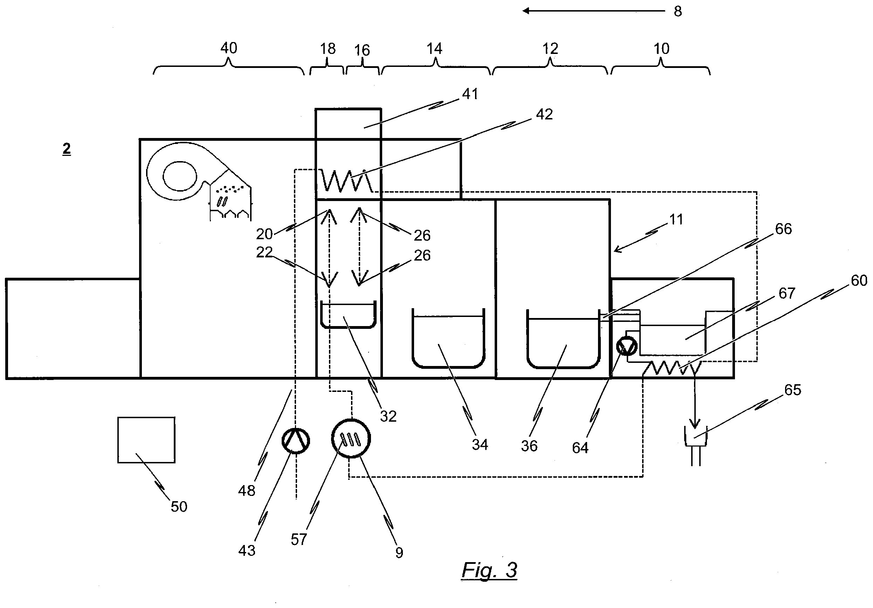

The exemplary embodiment of the conveyor dishwasher according to the invention shown schematically in FIG. 3 corresponds substantially to the embodiment shown beforehand with reference to the representation in FIG. 2, in the case of the variant shown in FIG. 3, however, the waste water heat recovery system not having a heat pump device associated therewith.

Rather, in the case of the embodiment shown in FIG. 3, at least a portion of the thermal energy of the waste water which is to be discharged from the conveyor dishwasher 2 is transferred by means of a heat exchanger 60, which is preferably operated in accordance with the countercurrent principle, to the final rinse liquid which has been pre-heated in the waste air heat recovery system and is to be sprayed in the final rinse zone 18.

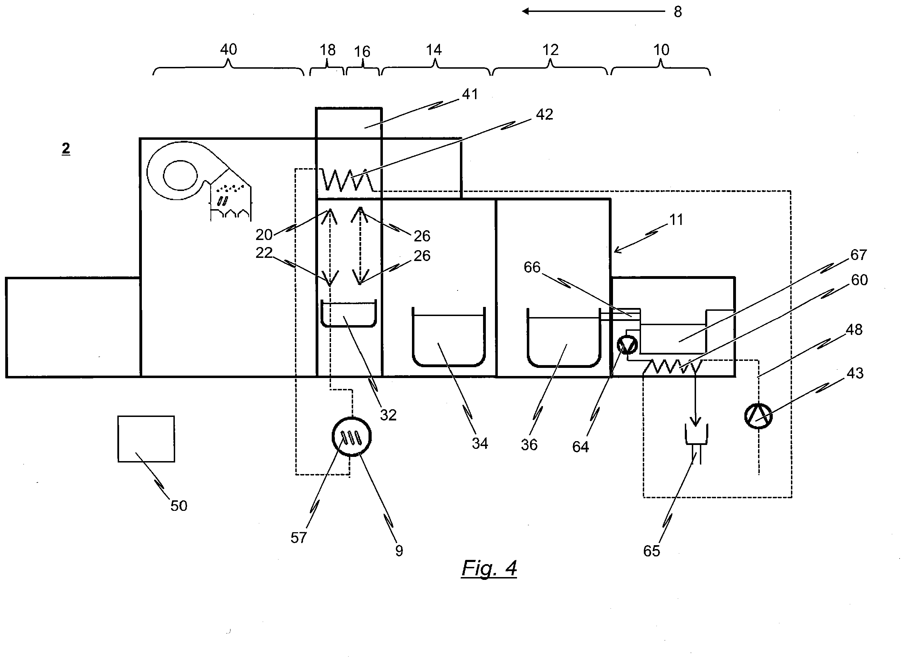

The embodiment of the conveyor dishwasher 2 according to the invention shown schematically in FIG. 4 corresponds substantially to the embodiment described beforehand with reference to the representation in FIG. 3, in the case of the conveyor dishwasher 2 according to FIG. 4, however, the waste water heat recovery system being connected upstream of the waste air heat recovery system such that the final rinse liquid which is to be sprayed in the final rinse zone 18 is initially pre-heated in the waste water heat recovery system and is then supplied to the waste air heat recovery system.

Apart from this, the embodiment shown schematically in FIG. 4 corresponds to the variant described beforehand with reference to FIG. 3.

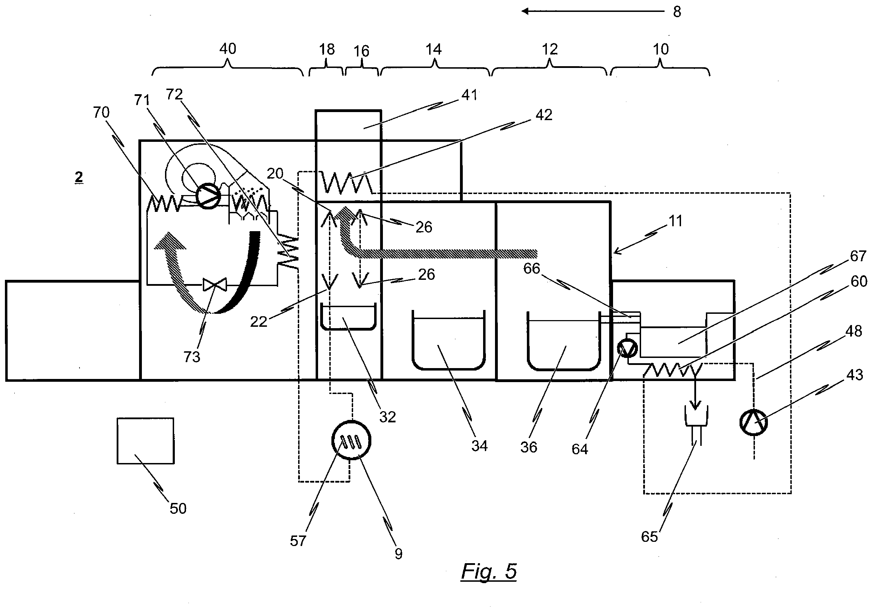

A further exemplary embodiment of the conveyor dishwasher 2 according to the invention is described below with reference to the representation in FIG. 5. Said further embodiment is characterized, in particular, in that a drying air heat recovery system is also provided in addition to the waste water heat recovery system and the waste air heat recovery system in order to transfer at least a portion of the thermal energy of the drying air which circulates in the drying zone 40 of the conveyor dishwasher 2 to the final rinse liquid which is to be sprayed in the final rinse zone 18.

As shown in FIG. 5, the drying air heat recovery system is connected in series with the waste water heat recovery system and the waste air heat recovery system, the final rinse liquid (fresh water) which is to be sprayed in the final rinse zone 18 of the conveyor dishwasher 2 - as indicated in FIG. 5 - being pre-heated initially in the waste water heat recovery system, then being heated further in the waste air heat recovery system and finally being supplied to the drying air heat recovery system. As seen in the direction of flow of the final rinse liquid which is to be sprayed in the final rise zone 18, another (additional) hot water heater 9, which is drivable independently of the heat recovery systems, is preferably provided for the drying air heat recovery system.

It must be pointed out at this point that the sequence of the heat recovery systems which are connected in series can also be chosen in a different manner.

The drying air heat recovery system which is shown schematically in FIG. 5 has associated therewith a heat pump device which has an evaporator 70 in which a refrigerant of the heat pump device evaporates when the evaporator 70 is flowed around by the hot drying air of the drying zone. The refrigerant which has been evaporated in the evaporator 70 of the heat pump device is compressed by a heat pump compressor 71 after total evaporation and superheating in the gaseous state and is thus brought to a higher pressure and temperature level. On the high-pressure side of the compressor 71, the thermal energy, which has been received beforehand from the hot drying air, is then output as useful heat or rather heat output to the final rinse liquid which has already been pre-heated by means of the waste water and waste air heat recovery systems and is to be sprayed in the final rinse zone 18.

After passing at least one condenser or rather heat exchanger 72 in which the thermal energy, which has been received beforehand from the hot drying air, is output as useful heat or rather heat output to the final rinse liquid which has already been pre-heated by means of the waste water and waste air heat recovery systems and is to be sprayed in the final rinse zone 18, the refrigerant of the heat pump device condenses and undercools before it is expanded via the expansion valve 73 and, as a result, a lower pressure level is reached again.

Accordingly, it is evident that in the case of the embodiment of the conveyor dishwasher 2 according to the invention which is shown schematically in FIG. 5, the thermal energy, which has been recovered from the drying air of the drying zone 40 of the conveyor dishwasher 2, is used, in particular, for further heating of the final rinse liquid which has already been pre-heated by means of the waste water and waste air heat recovery systems. For this purpose, the heat pump device has associated therewith a condenser or rather heat exchanger 72 in order to be able to transfer at least a portion of the thermal energy of the refrigerant as useful heat to the final rinse liquid which is to be sprayed in the at least one final rinse zone 18. It is provided, in particular, in this connection, that the heat exchangers 60, 42 of the waste water heat recovery system and of the waste air heat recovery system are arranged, as seen in the direction of flow of the final rinse liquid which is to be sprayed in the final rinse zone 18, upstream of the condenser or rather heat exchanger 72 of the heat pump device of the drying air heat recovery system in order, consequently, to be able to pre-heat the liquid to be sprayed in the final rinse zone 18.

Provided, in particular, in the case of the embodiment which is shown schematically in FIG. 5 is that the drying air is recirculated in the drying zone 40 and, in particular, is not discharged via the waste air system. The waste air system with its associated suction blower 41 simply serves for the purpose of discharging vapors and/or moist-hot air from the rinse and wash zones of the conveyor dishwasher 2 and supplying them to the waste air heat recovery system and in particular to the heat exchanger 42 of the waste air heat recovery system. Said separate air routing is indicated by way of the corresponding arrows in FIG. 5.

As additionally indicated schematically in FIG. 5, in the case of said embodiment of the conveyor dishwasher 2 according to the invention, another (alternative) heating device is provided, this being, in this connection, in particular, an electrically operated heating device 57, or an additional heating device which is operated by way of steam or gas, which is realized independently of the waste water heat recovery system, of the waste air heat recovery system and of the drying air heat recovery system. Using said additional (alternative) heating device 57, the final rinse liquid which is to be sprayed in the final rinse zone 18 can be supplied, as required, and independently of the heat recovery systems, with thermal energy in order to achieve that the final rinse liquid which is to be sprayed in the final rinse zone 18 always has a previously defined or definable minimum process temperature of, for example, at least 65°C.

The invention is not restricted to the embodiments which are shown in the drawings, but is produced from an overall view of all the features and aspects which are disclosed herein.

In particular, it is conceivable in said context for the waste water pump to be realized so as to supply wash liquid continually or cyclically to the waste water heat recovery system. In this case, the temperature of the wash liquid is as a rule between 40°C and 75°C depending on the machine model and the treatment program selected. After flowing through the heat exchanger device which is associated with the waste water heat recovery system, the wash liquid (waste water) is cooled down by approximately 20°C to 30°C.

The heat energy is transferred to fresh water which flows countercurrent and is heated by the same temperature amount as the waste water is cooled. The pre-heated fresh water is then heated further in the waste air heat recovery system and, where applicable, in the drying air heat recovery system and is then heated, as required, by a hot water heater, such as for example by a water heater 9, to the required process temperature of at least 65°C or rather at least 80°C.

It is also conceivable, in particular, in said context, to provide corresponding temperature sensors in the wash tank, in the wash water supply line to the heat exchanger device and/or in the final rinse liquid outlet or rather in the line which is connected downstream for the freshwater which has been heated or pre-heated in the heat exchanger device, so that the control device is able to activate the waste water pump and/or the hot water heater and/or the hot water connection in a corresponding manner.

## Claims

1. A conveyor dishwasher (2), in particular commercial conveyor dishwasher (2), having a conveying apparatus (4) for conveying washware through the individual treatment zones of the conveyor dishwasher (2), wherein the conveyor dishwasher (2) has at least one wash zone (12, 14, 16) in which wash liquid from a wash tank (32, 34, 36) which is associated with the at least one wash zone (12, 14, 16) can be sprayed onto the washware, at least one final rinse zone (18) which is arranged downstream of the at least one wash zone (12, 14, 16) as seen in the conveying direction (8) of the washware and in which final rinse liquid can be sprayed onto the washware, a wash system which is associated with the at least one wash zone (12, 14, 16) and has at least one wash pump (33, 35, 45) and wash nozzles (26, 28, 30), wherein wash liquid from the wash tank (32, 34, 36) can be supplied to the wash nozzles (26, 28, 30) with the aid of the at least one wash pump (33, 35, 45), and wherein the wash liquid which is sprayable with the wash nozzles (26, 28, 30) can at least partially flow back into the wash tank (32, 34, 36) again due to gravity, a waste air system for discharging waste air from the conveyor dishwasher (2), a waste water heat recovery system for transferring at least a portion of the thermal energy in the waste water from the conveyor dishwasher (2) as useful heat to the final rinse liquid which is to be sprayed in the at least one final rinse zone (18), a waste air heat recovery system for transferring at least a portion of the thermal energy in the waste air which is discharged or is to be discharged from the conveyor dishwasher (2) as useful heat to the final rinse liquid which is to be sprayed in the at least one final rinse zone (18),
**characterized by**
a waste water pump (64) for supplying wash liquid, which is produced as a waste water during operation of the conveyor dishwasher (2) to a heat exchanger (60) of the waste water heat recovery system in which at least a portion of the thermal energy in the supplied wash liquid is transferred to the final rinse liquid which is to be sprayed in the final rinse zone (18), and
an auxiliary tank (67) which forms or can form a flow connection with the wash tank (32, 34, 36) in particular by means of an overflow (66) or a bypass line, wherein the intake end of the waste water pump (64) forms or can form a direct flow connection with the auxiliary tank (67).

2. The conveyor dishwasher (2) as claimed in claim 1,
wherein said heat exchanger (60) is operateable in accordance with the countercurrent principle for transferring at least a portion of the thermal energy in the waste water as useful heat to the final rinse liquid which is to be sprayed in the at least one final rinse zone (18); and/or
wherein the waste air heat recovery system has at least one heat exchanger (42) which is preferably operateable in accordance with the countercurrent principle for transferring at least a portion of the thermal energy in the waste air as useful heat to at least the final rinse liquid which is to be sprayed in the at least one final rinse zone (18); and/or
wherein the waste water heat recovery system and the waste air heat recovery system are connected in series in such a way that the final rinse liquid which is to be sprayed in the at least one final rinse zone (18) is heated to a first temperature level in one of the two recovery systems and is then heated to a second, higher temperature level in the other of the two recovery systems.

3. The conveyor dishwasher (2) as claimed in claim 2,
wherein a heating device (57) which is associated with the at least one final rinse zone (18) is further provided for heating the final rinse liquid which is to be sprayed in the at least one final rinse zone (18) to or above a previously defined or definable final temperature.

4. The conveyor dishwasher (2) as claimed in one of claims 1 to 3,
wherein the waste water heat recovery system has at least one heat pump device for transferring at least a portion of the thermal energy in the waste water from the conveyor dishwasher (2) as useful heat to the final rinse liquid which is to be sprayed in the at least one final rinse zone (18).

5. The conveyor dishwasher (2) as claimed in claim 4,
wherein the heat pump device has at least one evaporator (61) for transferring at least a portion of the thermal energy in the waste water to a refrigerant of the heat pump device; and
wherein the heat pump device further has a condenser/heat exchanger (60) for transferring at least a portion of the thermal energy in the refrigerant as useful heat to the final rinse liquid which is to be sprayed in the at least one final rinse zone (18).

6. The conveyor dishwasher (2) as claimed in claim 5,
wherein the waste air heat recovery system is arranged upstream of the condenser/heat exchanger (60) of the heat pump device as seen in the direction of flow of the final rinse liquid which is to be sprayed in the at least one final rinse zone (18), for preheating the final rinse liquid which is to be sprayed in the final rinse zone (18).

7. The conveyor dishwasher (2) as claimed in one of claims 1 to 6,
wherein the conveyor dishwasher (2) has a control device (50) which is designed to drive the waste water pump (64) depending on a quantity of final rinse liquid which is currently required for final rinsing during operation of the conveyor dishwasher (2) and/or depending on a quantity of waste water which is produced during operation of the conveyor dishwasher (2) and/or depending on a liquid level in the wash tank (32, 34, 36) and/or depending on a previously defined event and/or depending on an operating cycle and/or operating state of the conveyor dishwasher (2); and/or
wherein the conveyor dishwasher (2) has a control device (50) which is designed to switch off the waste water pump (64), preferably to switch off the said waste water pump automatically, when the liquid level in the wash tank (32, 34, 36) falls below a previously defined or definable first level, and to switch on the waste water pump (64) again, preferably to switch on the said waste water pump again automatically, as soon as the liquid level in the wash tank (32, 34, 36) again exceeds a previously defined or definable second level, wherein the first level preferably corresponds to the second level.

8. The conveyor dishwasher (2) as claimed in claim 7,
wherein the control device (50) is designed to initiate hot water treatment, which is independent of the waste water and waste air heat recovery systems, of the final rinse liquid which is to be sprayed in the final rinse zone (18), specifically in particular when:
i) the thermal energy which is transferred to the final rinse liquid, which is to be sprayed in the final rinse zone (18), in the waste water and waste air heat recovery systems is not sufficient to heat the final rinse liquid to a previously defined or definable minimum temperature; and/or
ii) no wash liquid is supplied to the waste water heat recovery system; and/or iii) the quantity of wash liquid which is supplied to the waste water heat recovery system per unit time is not sufficient to heat the final rinse liquid to a previously defined or definable minimum temperature; and/or
iv) no waste air is supplied to the waste air heat recovery system; and/or
v) the quantity of waste air which is supplied to the waste air heat recovery system per unit time is not sufficient to heat the final rinse liquid to a previously defined or definable minimum temperature; and/or
vi) the temperature of the wash liquid which is supplied to the waste water heat recovery system and/or the temperature of the waste air which is supplied to the waste air heat recovery system is not sufficient to heat the final rinse liquid to a previously defined or definable minimum temperature.

9. The conveyor dishwasher (2) as claimed in claim 8,
wherein the conveyor dishwasher (2) has a boiler (57) for heating the final rinse liquid which is to be sprayed in the final rinse zone (18), wherein the control device (50) is designed to activate the boiler (57) when:
i) the thermal energy which is transferred to the final rinse liquid, which is to be sprayed in the final rinse zone (18), in the waste water and waste air heat recovery systems is not sufficient to heat the final rinse liquid to a previously defined or definable minimum temperature; and/or
ii) no wash liquid is supplied to the waste water heat recovery system; and/or iii) the quantity of wash liquid which is supplied to the waste water heat recovery system per unit time is not sufficient to heat the final rinse liquid to a previously defined or definable minimum temperature; and/or
iv) no waste air is supplied to the waste air heat recovery system; and/or
v) the quantity of waste air which is supplied to the waste air heat recovery system per unit time is not sufficient to heat the final rinse liquid to a previously defined or definable minimum temperature; and/or
vi) the temperature of the wash liquid which is supplied to the waste water heat recovery system and/or the temperature of the waste air which is supplied to the waste air heat recovery system is not sufficient to heat the final rinse liquid to a previously defined or definable minimum temperature,
wherein the boiler (57) is preferably designed to heat the final rinse liquid which is to be sprayed in the final rinse zone (18) to a previously defined or definable minimum temperature using electrical energy, steam, a heat pump, gas or hot water.

10. The conveyor dishwasher (2) as claimed in one of claims 1 to 9,
wherein the intake end of the waste water pump (64) forms or can form a direct flow connection with the wash tank (32, 34, 36).

11. The conveyor dishwasher (2) as claimed in one of claims 1 to 10,
wherein the wash tank (32, 34, 36) has a capacity of 20 to 200 litres, and the auxiliary tank (67) has a capacity of 10 to 50 litres.

12. The conveyor dishwasher (2) as claimed in one of claims 1 to 11,
wherein the conveyor dishwasher (2) further has a waste water line (65) which forms or is able to form a flow connection with a waste water network and by means of which the wash liquid is discharged after the wash liquid has first passed the waste water heat recovery system.

13. The conveyor dishwasher (2) as claimed in one of claims 1 to 12,
wherein the waste air heat recovery system is designed to cool the waste air which is discharged or is to be discharged from the conveyor dishwasher (2) to a temperature in a range of between 18°C and 25°C, in particular to ambient temperature in the room in which the conveyor dishwasher (2) is installed, during operation of the conveyor dishwasher (2).

14. The conveyor dishwasher (2) as claimed in one of claims 1 to 13,
wherein a drying air heat recovery system is further provided for transferring at least a portion of the thermal energy in the drying air which is circulating in a drying zone (40) of the conveyor dishwasher (2) as useful heat to the final rinse liquid which is to be sprayed in the at least one final rinse zone (18),
wherein the drying air heat recovery system preferably has at least one heat pump device for transferring at least a portion of the thermal energy in the drying air as useful heat to the final rinse liquid which is to be sprayed in the at least one final rinse zone (18).

15. A method for operating a conveyor dishwasher (2) according to one of claims 1 to 14, wherein the method comprises the following method steps:
i) a waste water heat recovery system is used to transfer at least a portion of the thermal energy in the waste water which is to be discharged or is discharged from the conveyor dishwasher (2) as useful heat to the final rinse liquid which is to be sprayed in the at least one final rinse zone (18); and
ii) a waste air heat recovery system is used to transfer at least a portion of the thermal energy in the waste air which is discharged or is to be discharged from the conveyor dishwasher (2) as useful heat to the final rinse liquid which is to be sprayed in the at least one final rinse zone (18),
wherein the method preferably further comprises the following method step:
iii) a drying air heat recovery system is used to transfer at least a portion of the thermal energy in the drying air which is circulating in a drying zone (40) of the conveyor dishwasher (2) as useful heat to the final rinse liquid which is to be sprayed in the at least one final rinse zone (18).

## Patentansprüche

1. Transportspülmaschine (2), insbesondere gewerbliche Transportspülmaschine (2), die eine Transportvorrichtung (4) zum Transportieren von Spülgut durch die einzelnen Behandlungszonen der Transportspülmaschine (2) aufweist, wobei die Transportspülmaschine (2) mindestens eine Waschzone (12, 14, 16), in der Waschflüssigkeit aus einem der mindestens einen Waschzone (12, 14, 16) zugeordneten Waschtank (32, 34, 36) auf das Spülgut gesprüht werden kann, mindestens eine in Transportrichtung (8) des Spülguts gesehen hinter der mindestens einen Waschzone (12, 14, 16) angeordnete Klarspülzone (18), in der Klarspülflüssigkeit auf das Spülgut aufgesprüht werden kann, ein Waschsystem, das der mindestens einen Waschzone (12, 14, 16) zugeordnet ist, und mindestens eine Waschpumpe (33, 35, 45) und Waschdüsen (26, 28, 30) aufweist, wobei den Waschdüsen (26, 28, 30) mit Hilfe der mindestens einen Waschpumpe (33, 35, 45) Waschflüssigkeit aus dem Waschtank (32, 34, 36) zugeführt werden kann, und wobei die mit den Waschdüsen (26, 28, 30) versprühbare Waschflüssigkeit mindestens teilweise aufgrund der Schwerkraft wieder in den Waschtank (32, 34, 36) zurückfließen kann, ein Abluftsystem zum Abführen von Abluft aus der Transportspülmaschine (2), ein Abwasserwärmerückgewinnungssystem zur Übertragung von mindestens einem Teil der thermischen Energie des Abwassers aus der Transportspülmaschine (2) als Nutzwärme auf die in der mindestens einen Klarspülzone (18) zu versprühende Klarspülflüssigkeit, ein Abluftwärmerückgewinnungssystem zur Übertragung von mindestens einem Teil der thermischen Energie der aus der Transportspülmaschine (2) abgeführten oder abzuführenden Abluft als Nutzwärme auf die in der mindestens einen Klarspülzone (18) zu versprühende Klarspülflüssigkeit, aufweist,
**gekennzeichnet durch**
eine Abwasserpumpe (64) zum Zuführen von während des Betriebs der Transportspülmaschine (2) als Abwasser erzeugter Waschflüssigkeit zu einem Wärmetauscher (60) des Abwasserwärmerückgewinnungssystems, wobei mindestens ein Teil der thermischen Energie in der zugeführten Waschflüssigkeit auf die in der Klarspülzone (18) zu versprühende Klarspülflüssigkeit übertragen wird, und einen Zusatztank (67), der, insbesondere mittels eines Überlaufs (66) oder einer Bypassleitung, eine Strömungsverbindung mit dem Waschtank (32, 34, 36) bildet oder bilden kann, wobei das Einlassende der Abwasserpumpe (64) eine direkte Strömungsverbindung mit dem Zusatztank (67) bildet oder bilden kann.

2. Transportspülmaschine (2) nach Anspruch 1,
wobei der Wärmetauscher (60) gemäß dem Gegenstromprinzip zur Übertragung mindestens eines Teils der thermischen Energie in dem Abwasser als Nutzwärme auf die in der mindestens einen Klarspülzone (18) zu versprühende Klarspülflüssigkeit betreibbar ist; und/oder
wobei das Abluftwärmerückgewinnungssystem mindestens einen Wärmetauscher (42) aufweist, der gemäß dem Gegenstromprinzip zur Übertragung mindestens eines Teils der thermischen Energie in der Abluft als Nutzwärme auf die in der mindestens einen Klarspülzone (18) zu versprühende Klarspülflüssigkeit betreibbar ist; und/oder
wobei das Abwasserwärmerückgewinnungssystem und das Abluftwärmerückgewinnungssystem derart in Reihe geschaltet sind, dass die in der mindestens einen Klarspülzone (18) zu versprühende Klarspülflüssigkeit in einem der zwei Rückgewinnungssysteme auf ein erstes Temperaturniveau erwärmt wird und in dem anderen der zwei Rückgewinnungssysteme anschließend auf ein zweites, höheres Temperaturniveau erwärmt wird.

3. Transportspülmaschine (2) nach Anspruch 2,
wobei ferner eine der mindestens einen Klarspülzone (18) zugeordnete Heizvorrichtung (57) zum Erwärmen der in der mindestens einen Klarspülzone (18) zu versprühenden Klarspülflüssigkeit auf oder über eine zuvor definierte oder definierbare Endtemperatur vorgesehen ist.

4. Transportspülmaschine (2) nach einem der Ansprüche 1 bis 3, wobei das Abwasserwärmerückgewinnungssystem mindestens eine Wärmepumpenvorrichtung zur Übertragung mindestens eines Teils der thermischen Energie in dem Abwasser aus der Transportspülmaschine (2) als Nutzwärme auf die in der mindestens einen Klarspülzone (18) zu versprühende Klarspülflüssigkeit aufweist.

5. Transportspülmaschine (2) nach Anspruch 4,
wobei die Wärmepumpenvorrichtung mindestens einen Verdampfer (61) zur Übertragung mindestens eines Teils der thermischen Energie in dem Abwasser auf ein Kältemittel der Wärmepumpenvorrichtung aufweist; und
wobei die Wärmepumpenvorrichtung ferner einen Kondensator/Wärmetauscher (60) zur Übertragung mindestens eines Teils der thermischen Energie in dem Kältemittel als Nutzwärme auf die in der Klarspülzone (18) zu versprühende Klarspülflüssigkeit aufweist.

6. Transportspülmaschine (2) nach Anspruch 5,
wobei das Abluftwärmerückgewinnungssystem, zum Vorwärmen der in der Klarspülzone (18) zu versprühenden Klarspülflüssigkeit, bei Betrachtung in der Strömungsrichtung der in der mindestens einen Klarspülzone (18) zu versprühen Klarspülflüssigkeit stromaufwärts des Kondensators/Wärmetauschers (60) der Wärmepumpenvorrichtung angeordnet ist.

7. Transportspülmaschine (2) nach einem der Ansprüche 1 bis 6, wobei die Transportspülmaschine (2) eine Steuervorrichtung (50) aufweist, die dazu ausgelegt ist, die Abwasserpumpe (64) in Abhängigkeit von einer Menge einer Klarspülflüssigkeit, die zur Klarspülung während des Betriebs der Transportspülmaschine (2) aktuell benötigt wird, und/oder in Abhängigkeit von einer Menge von Abwasser, das während des Betriebs der Transportspülmaschine (2) erzeugt wird, und/oder in Abhängigkeit von einem Flüssigkeitspegel in dem Waschtank (32, 34, 36), und/oder in Abhängigkeit von einem zuvor definierten Ereignis, und/oder in Abhängigkeit von einem Betriebszyklus und/oder Betriebszustand der Transportspülmaschine (2) anzusteuern; und/oder
wobei die Transportspülmaschine (2) eine Steuervorrichtung (50) aufweist, die dazu ausgelegt ist, die Abwasserpumpe (64) abzuschalten, vorzugsweise die Abwasserpumpe automatisch abzuschalten, wenn der Flüssigkeitspegel in dem Waschtank (32, 34, 36) unter einen zuvor definierten oder definierbaren ersten Pegel fällt, und die Abwasserpumpe (64) wieder einzuschalten, vorzugsweise die Abwasserpumpe automatisch wieder einzuschalten, sobald der Flüssigkeitspegel in dem Waschtank (32, 34, 36) einen zuvor definierten oder definierbaren zweiten Pegel wieder überschreitet, wobei der erste Pegel vorzugsweise dem zweiten Pegel entspricht.

8. Transportspülmaschine (2) nach Anspruch 7,
wobei die Steuervorrichtung (50) dazu ausgelegt ist, eine Heißwasserbehandlung der in der Klarspülzone (18) zu versprühenden Klarspülflüssigkeit zu initiieren, welche unabhängig von dem Abwasser- und dem Abluftwärmerückgewinnungssystem ist, und zwar insbesondere dann, wenn:
i) die thermische Energie in dem Abwasser- und dem Abluftwärmerückgewinnungssystem, die auf die in der Klarspülzone (18) zu versprühende Klarspülflüssigkeit übertragen wird, nicht ausreicht, um die Klarspülflüssigkeit auf eine zuvor definierte oder definierbare Mindesttemperatur zu erwärmen; und/oder
ii)dem Abwasserwärmerückgewinnungssystem keine Waschflüssigkeit zugeführt wird; und/oder
iii) die Menge von Waschflüssigkeit, die dem Abwasserwärmerückgewinnungssystem pro Zeiteinheit zugeführt wird, nicht ausreicht, um die Klarspülflüssigkeit auf eine zuvor definierte oder definierbare Mindesttemperatur zu erwärmen; und/oder
iv) dem Abluftwärmerückgewinnungssystem keine Abluft zugeführt wird; und/oder
v) die Menge von Abluft, die dem Abluftwärmerückgewinnungssystem pro Zeiteinheit zugeführt wird, nicht ausreicht, um die Klarspülflüssigkeit auf eine zuvor definierte oder definierbare Mindesttemperatur zu erwärmen;
und/oder
vi)die Temperatur der Waschflüssigkeit, die dem Abwasserwärmerückgewinnungssystem zugeführt wird, und/oder die Temperatur der Abluft, die dem Abluftwärmerückgewinnungssystem zugeführt wird, nicht ausreicht, um die Klarspülflüssigkeit auf eine zuvor definierte oder definierbare Mindesttemperatur zu erwärmen.

9. Transportspülmaschine (2) nach Anspruch 8,
wobei die Transportspülmaschine (2) einen Warmwasseraufbereiter (57) zum Erwärmen der in der Klarspülzone (18) zu versprühenden Klarspülflüssigkeit aufweist, wobei die Steuervorrichtung (50) dazu ausgelegt ist, den Warmwasseraufbereiter (57) dann zu aktivieren, wenn:
i) die thermische Energie in dem Abwasser- und dem Abluftwärmerückgewinnungssystem, die auf die in der Klarspülzone (18) zu versprühende Klarspülflüssigkeit übertragen wird, nicht ausreicht, um die Klarspülflüssigkeit auf eine zuvor definierte oder definierbare Mindesttemperatur zu erwärmen;
und/oder
ii)dem Abwasserwärmerückgewinnungssystem keine Waschflüssigkeit zugeführt wird; und/oder
iii) die Menge von Waschflüssigkeit, die dem Abwasserwärmerückgewinnungssystem pro Zeiteinheit zugeführt wird, nicht ausreicht, um die Klarspülflüssigkeit auf eine zuvor definierte oder definierbare Mindesttemperatur zu erwärmen; und/oder
iv)dem Abluftwärmerückgewinnungssystem keine Abluft zugeführt wird; und/oder
v) die Menge von Abluft, die dem Abluftwärmerückgewinnungssystem pro Zeiteinheit zugeführt wird, nicht ausreicht, um die Klarspülflüssigkeit auf eine zuvor definierte oder definierbare Mindesttemperatur zu erwärmen;
und/oder
vi)die Temperatur der Waschflüssigkeit, die dem Abwasserwärmerückgewinnungssystem zugeführt wird, und/oder die Temperatur der Abluft, die dem Abluftwärmerückgewinnungssystem zugeführt wird, nicht ausreicht, um die Klarspülflüssigkeit auf eine zuvor definierte oder definierbare Mindesttemperatur zu erwärmen,
wobei der Warmwasseraufbereiter (57) vorzugsweise dazu ausgelegt ist, die in der mindestens einen Klarspülzone (18) zu versprühende Klarspülflüssigkeit mittels elektrischer Energie, Dampf, einer Wärmepumpe, Gas oder Heißwasser auf eine zuvor definierte oder definierbare Mindesttemperatur zu erwärmen.

10. Transportspülmaschine (2) nach einem der Ansprüche 1 bis 9, wobei das Einlassende der Abwasserpumpe (64) eine direkte Strömungsverbindung mit dem Waschtank (32, 34, 36) bildet oder bilden kann.

11. Transportspülmaschine (2) nach einem der Ansprüche 1 bis 10, wobei der Waschtank (32, 34, 36) ein Fassungsvermögen von 20 bis 200 Litern aufweist und der Zusatztank (67) ein Fassungsvermögen von 10 bis 50 Litern aufweist.

12. Transportspülmaschine (2) nach einem der Ansprüche 1 bis 11, wobei die Transportspülmaschine (2) ferner eine Abwasserleitung (65) aufweist, die eine Strömungsverbindung mit einem Abwassernetz bildet oder bilden kann, und mittels derer die Waschflüssigkeit abgeführt wird, nachem die Waschflüssigkeit zuerst das Abwasserwärmerückgewinnungssystem passiert hat.

13. Transportspülmaschine (2) nach einem der Ansprüche 1 bis 12, wobei das Abluftwärmerückgewinnungssystem dazu ausgelegt ist, die aus der Transportspülmaschine (2) abzuführende oder abgeführte Abluft während des Betriebs der Transportspülmaschine (2) auf eine Temperatur in einem Bereich zwischen 18 °C und 25 °C, insbesondere auf Umgebungstemperatur in dem Raum, in dem die Transportspülmaschine (2) aufgestellt ist, abzukühlen.

14. Transportspülmaschine (2) nach einem der Ansprüche 1 bis 13, wobei ferner ein Trocknungsluftwärmerückgewinnungssystem zur Übertragung mindestens eines Teils der thermischen Energie in der in einer Trocknungszone (40) der Transportspülmaschine (2) zirkulierenden Trocknungsluft als Nutzwärme auf die in der mindestens einen Klarspülzone (18) zu versprühende Klarspülflüssigkeit vorgesehen ist,
wobei das Trocknungsluftwärme-Rückgewinnungssystem vorzugsweise mindestens eine Wärmepumpenvorrichtung zur Übertragung mindestens eines Teils der thermischen Energie in der Trocknungsluft als Nutzwärme auf die in der mindestens einen Klarspülzone (18) zu versprühende Klarspülflüssigkeit aufweist.

15. Verfahren zum Betreiben einer Transportspülmaschine (2) nach einem der Ansprüche 1 bis 14, wobei das Verfahren die folgenden Verfahrensschritte aufweist:
i) ein Abwasserwärmerückgewinnungssystem wird verwendet, um mindestens einen Teil der thermischen Energie in dem aus der Transportspülmaschine (2) abzuführenden oder abgeführten Abwasser als Nutzwärme auf die in der mindestens einen Klarspülzone (18) zu versprühende Klarspülflüssigkeit zu übertragen; und
ii)ein Abluftwärmerückgewinnungssystem wird verwendet, um mindestens einen Teil der thermischen Energie in der aus der Transportspülmaschine (2) abgeführten oder abzuführenden Abluft als Nutzwärme auf die in der mindestens einen Klarspülzone (18) zu versprühende Klarspülflüssigkeit zu übertragen,
wobei das Verfahren vorzugsweise ferner den folgenden Verfahrensschritt aufweist:
iii) ein Trocknungsluftwärmerückgewinnungssystem wird verwendet, um mindestens einen Teil der thermischen Energie in der in einer Trocknungszone (40) der Transportspülmaschine (2) zirkulierenden Trocknungsluft als Nutzwärme auf die in der mindestens einen Klarspülzone (18) zu versprühende Klarspülflüssigkeit zu übertragen.

## Revendications

1. Lave-vaisselle à convoyeur (2), en particulier lave-vaisselle à convoyeur commercial (2), ayant un appareil de transport (4) pour le transport de la vaisselle à travers les zones de traitement individuelles du lave-vaisselle à convoyeur (2), dans lequel le lave-vaisselle à convoyeur (2) a au moins une zone de lavage (12, 14, 16) dans laquelle le liquide de lavage provenant d'une cuve de lavage (32, 34, 36) qui est associée à l'au moins une zone de lavage (12, 14, 16) peut être pulvérisé sur la vaisselle, au moins une zone de rinçage final (18) qui est agencée en aval de l'au moins une zone de lavage (12, 14, 16) telle que vue dans la direction de transport (8) de la vaisselle et dans laquelle le liquide de rinçage final peut être pulvérisé sur la vaisselle, un système de lavage qui est associé avec l'au moins une zone de lavage (12, 14, 16) et comporte au moins une pompe de lavage (33, 35, 45) et des buses de lavage (26, 28, 30), dans lequel le liquide de lavage provenant de la cuve de lavage (32, 34, 36) peut être fourni aux buses de lavage (26, 28, 30) à l'aide de l'au moins une pompe de lavage (33, 35, 45), et dans lequel le liquide de lavage qui peut être pulvérisé avec les buses de lavage (26, 28, 30) peut au moins partiellement refluer dans la cuve de lavage (32, 34, 36) par gravité, un système d'air vicié pour l'évacuation de l'air vicié provenant du lave-vaisselle à convoyeur (2), un système de récupération de chaleur des eaux usées pour le transfert d'au moins une partie de l'énergie thermique dans les eaux usées du lave-vaisselle à convoyeur (2) en tant que chaleur utile au liquide de rinçage final qui doit être pulvérisé dans l'au moins une zone de rinçage final (18), un système de récupération de chaleur de l'air vicié pour le transfert d'au moins une partie de l'énergie thermique dans l'air vicié qui est évacué ou doit être évacué provenant du lave-vaisselle à convoyeur (2) en tant que chaleur utile au liquide de rinçage final qui doit être pulvérisé dans l'au moins une zone de rinçage final (18),
**caractérisé par**
une pompe à eaux usées (64) pour la fourniture du liquide de lavage, qui est produit en tant qu'eaux usées durant le fonctionnement du lave-vaisselle à convoyeur (2) à un échangeur de chaleur (60) du système de récupération de chaleur des eaux usées dans lequel au moins une partie de l'énergie thermique dans le liquide de lavage fourni est transférée au liquide de rinçage final qui doit être pulvérisé dans la zone de rinçage final (18), et
une cuve auxiliaire (67) qui forme ou peut former une liaison d'écoulement avec la cuve de lavage (32, 34, 36), en particulier au moyen d'un déversoir (66) ou d'une conduite de dérivation, dans laquelle l'extrémité d'aspiration de la pompe d'eaux usées (64) forme ou peut former une liaison d'écoulement directe avec la cuve auxiliaire (67).

2. Lave-vaisselle à convoyeur (2) selon la revendication 1,
dans lequel ledit échangeur de chaleur (60) est utilisable selon le principe du contre-courant, pour le transfert d'au moins une partie de l'énergie thermique dans les eaux usées en tant que chaleur utile au liquide de rinçage final qui doit être pulvérisé dans l'au moins une zone de rinçage final (18) ; et/ou
dans lequel le système de récupération de chaleur des eaux usées a au moins un échangeur de chaleur (42), qui est de préférence utilisable selon le principe du contre-courant, pour le transfert d'au moins une partie de l'énergie thermique dans les eaux usées en tant que chaleur utile au liquide de rinçage final qui doit être pulvérisé dans l'au moins une zone de rinçage final (18) ; et/ou
dans lequel le système de récupération de chaleur des eaux usées et le système de récupération de chaleur de l'air vicié sont connectés en série de sorte que le liquide de rinçage final qui doit être pulvérisé dans l'au moins une zone de rinçage final (18) est chauffé à un premier niveau de température dans l'un parmi les deux systèmes de récupération et est ensuite chauffé à un deuxième niveau de température plus élevé dans l'autre parmi les deux systèmes de récupération.

3. Lave-vaisselle à convoyeur (2) selon la revendication 2, dans lequel un dispositif de chauffage (57) qui est associé avec l'au moins une zone de rinçage final (18) est en outre fourni pour le chauffage du liquide de rinçage final qui doit être pulvérisé dans l'au moins une zone de rinçage final (18) à ou au-dessus d'une température finale préalablement définie ou définissable.

4. Lave-vaisselle à convoyeur (2) selon la revendication 1 à 3, dans lequel le système de récupération de chaleur des eaux usées a au moins un dispositif de pompe à chaleur pour le transfert d'au moins une partie de l'énergie thermique dans les eaux usées provenant du lave-vaisselle à convoyeur (2) en tant que chaleur utile au liquide de rinçage final qui doit être pulvérisé dans l'au moins une zone de rinçage final (18).

5. Lave-vaisselle à convoyeur (2) selon la revendication 4,
dans lequel le dispositif de pompe à chaleur a au moins un évaporateur (61) pour le transfert d'au moins une partie de l'énergie thermique dans les eaux usées à un réfrigérant du dispositif de pompe à chaleur ; et
dans lequel le dispositif de pompe à chaleur a en outre un condenseur/échangeur de chaleur (60) pour le transfert d'au moins une partie de l'énergie thermique dans le réfrigérant en tant que chaleur utile au liquide de rinçage final qui doit être pulvérisé dans l'au moins une zone de rinçage final (18).

6. Lave-vaisselle à convoyeur (2) selon la revendication 5,
dans lequel le système de récupération de chaleur de l'air vicié est agencé en amont du condenseur/échangeur de chaleur (60) du dispositif de pompe à chaleur tel que vu dans la direction d'écoulement du liquide de rinçage final qui doit être pulvérisé dans l'au moins une zone de rinçage final (18), pour le préchauffage du liquide de rinçage final qui doit être pulvérisé dans la zone de rinçage final (18).

7. Lave-vaisselle à convoyeur (2) selon l'une quelconque des revendications 1 à 6,
dans lequel le lave-vaisselle à convoyeur (2) a un dispositif de commande (50) qui est conçu pour entraîner la pompe des eaux usées (64) en fonction d'une quantité de liquide de rinçage final qui est actuellement nécessaire pour le rinçage final durant le fonctionnement du lave-vaisselle à convoyeur (2) et/ou en fonction d'une quantité d'eaux usées qui est produite durant le fonctionnement du lave-vaisselle à convoyeur (2) et/ou en fonction d'un niveau de liquide dans la cuve de lavage (32, 34, 36) et/ou en fonction d'un événement défini préalablement et/ou en fonction d'un cycle de fonctionnement et/ou d'un état de fonctionnement du lave-vaisselle à convoyeur (2) ; et/ou
dans lequel le lave-vaisselle à convoyeur (2) a un dispositif de commande (50) qui est conçu pour arrêter la pompe des eaux usées (64), de préférence pour couper automatiquement ladite pompe des eaux usées, lorsque le niveau de liquide dans la cuve de lavage (32, 34, 36) tombe en dessous d'un premier niveau défini ou définissable préalablement, et pour mettre en marche à nouveau la pompe des eaux usées (64), de préférence pour mettre en marche à nouveau automatiquement ladite pompe des eaux usées, dès que le niveau de liquide dans la cuve de lavage (32, 34, 36) dépasse à nouveau un deuxième niveau défini ou définissable préalablement, dans lequel le premier niveau correspond de préférence au deuxième niveau.

8. Lave-vaisselle à convoyeur (2) selon la revendication 7, dans lequel le dispositif de commande (50) est conçu pour initier un traitement à l'eau chaude, qui est indépendant des systèmes de récupération des eaux usées et de chaleur de l'air vicié, du liquide de rinçage final qui doit être pulvérisé dans la zone de rinçage final (18), spécifiquement en particulier lorsque :
i) l'énergie thermique qui est transférée au liquide de rinçage final, qui doit être pulvérisé dans la zone de rinçage final (18), dans les systèmes de récupération de chaleur des eaux usées et de l'air vicié n'est pas suffisante pour chauffer le liquide de rinçage final à une température minimale définie ou définissable préalablement ; et/ou
ii) aucun liquide de lavage n'est fourni au système de récupération de chaleur des eaux usées ; et/ou iii) la quantité de liquide de lavage qui est fournie au système de récupération de chaleur des eaux usées par unité de temps n'est pas suffisante pour chauffer le liquide de rinçage final à une température minimale définie ou définissable préalablement ; et/ou
iv) aucun air vicié n'est fourni au système de récupération de chaleur de l'air ; et/ou
v) la quantité d'air vicié qui est fournie au système de récupération de chaleur de l'air vicié par unité de temps n'est pas suffisante pour chauffer le liquide de rinçage final à une température minimale définie ou définissable préalablement ;
et/ou
vi) la température du liquide de lavage qui est fourni au système de récupération de chaleur des eaux usées et/ou la température de l'air vicié qui est fourni au système de récupération de chaleur des eaux usées n'est pas suffisante pour chauffer le liquide de rinçage final à une température minimale définie ou définissable préalablement.

9. Lave-vaisselle à convoyeur (2) selon la revendication 8,
dans lequel le lave-vaisselle à convoyeur (2) a un dispositif de chauffage (57) pour le chauffage du liquide de rinçage final qui doit être pulvérisé dans la zone de rinçage final (18), dans lequel le dispositif de commande (50) est conçu pour activer le dispositif de chauffage (57) lorsque :
i) l'énergie thermique qui est transférée au liquide de rinçage final, qui doit être pulvérisé dans la zone de rinçage final (18), dans les systèmes de récupération de chaleur des eaux usées et de l'air vicié n'est pas suffisante pour chauffer le liquide de rinçage final à une température minimale définie ou définissable préalablement ;
et/ou
ii) aucun liquide de lavage n'est fourni au système de récupération de chaleur des eaux usées ; et/ou iii) la quantité de liquide de lavage qui est fournie au système de récupération de chaleur des eaux usées par unité de temps n'est pas suffisante pour chauffer le liquide de rinçage final à une température minimale définie ou définissable préalablement ; et/ou
iv)aucun air vicié n'est fourni au système de récupération de chaleur de l'air vicié ; et/ou
v) la quantité d'air vicié qui est fournie au système de récupération de chaleur de l'air vicié par unité de temps n'est pas suffisante pour chauffer le liquide de rinçage final à une température minimale définie ou définissable préalablement ;
et/ou
vi)la température du liquide de lavage qui est fourni au système de récupération de chaleur des eaux usées et/ou la température de l'air vicié qui est fourni au système de récupération de chaleur de l'air vicié n'est pas suffisante pour chauffer le liquide de rinçage final à une température minimale définie ou définissable préalablement,
dans lequel le dispositif de chauffage (57) est préalablement conçu pour chauffer le liquide de rinçage final qui doit être pulvérisé dans la zone de rinçage final (18) à la température minimale définie ou définissable préalablement à l'aide d'énergie électrique, de vapeur, d'une pompe à chaleur, de gaz ou d'eau chaude.

10. Lave-vaisselle à convoyeur (2) selon l'une quelconque des revendications 1 à 9,
dans lequel l'extrémité d'aspiration de la pompe des eaux usées (64) forme ou peut former une liaison d'écoulement directe avec la cuve de lavage (32, 34, 36).

11. Lave-vaisselle à convoyeur (2) selon l'une quelconque des revendications 1 à 10,
dans lequel la cuve de lavage (32, 34, 36) a une capacité de 20 à 200 litres, et la cuve auxiliaire (67) a une capacité de 10 à 50 litres.

12. Lave-vaisselle à convoyeur (2) selon l'une quelconque des revendications 1 à 11,
dans lequel le lave-vaisselle à convoyeur (2) comporte en outre une conduite d'eaux usées (65) qui forme ou est capable de former une liaison d'écoulement avec un réseau d'eaux usées et au moyen de laquelle le liquide de lavage est évacué après que le liquide de lavage soit passé d'abord par le système de récupération de chaleur des eaux usées.

13. Lave-vaisselle à convoyeur (2) selon l'une quelconque des revendications 1 à 12,
dans lequel le système de récupération de chaleur de l'air vicié est conçu pour refroidir l'air vicié qui est évacué ou doit être évacué provenant du lave-vaisselle à convoyeur (2) à une température dans une plage comprise entre 18 °C et 25 °C, en particulier à température ambiante dans la pièce dans laquelle le lave-vaisselle à convoyeur (2) est installé, durant le fonctionnement du lave-vaisselle à convoyeur (2).

14. Lave-vaisselle à convoyeur (2) selon l'une quelconque des revendications 1 à 13,
dans lequel un système de récupération de chaleur d'air de séchage est en outre fourni pour le transfert d'au moins une partie de l'énergie thermique dans l'air de séchage qui circule dans une zone de séchage (40) du lave-vaisselle à convoyeur (2) en tant que chaleur utile au liquide de rinçage final qui doit être pulvérisé dans l'au moins une zone de rinçage final (18),
dans lequel le système de récupération de chaleur d'air de séchage a de préférence au moins un dispositif de pompe à chaleur pour le transfert d'au moins une partie de l'énergie thermique dans l'air de séchage en tant que chaleur utile au liquide de rinçage final qui doit être pulvérisé dans l'au moins une zone de rinçage final (18).

15. Procédé pour l'utilisation d'un lave-vaisselle à convoyeur (2) selon l'une quelconque des revendications 1 à 14, dans lequel le procédé comprend les étapes de procédé suivantes :
i) un système de récupération de chaleur des eaux usées est utilisé pour transférer au moins une partie de l'énergie thermique dans les eaux usées qui doivent être évacuées ou sont évacuées provenant du lave-vaisselle à convoyeur (2) en tant que chaleur utile au liquide de rinçage final qui doit être pulvérisé dans l'au moins une zone de rinçage final (18) ; et
ii)un système de récupération de chaleur de l'air vicié est utilisé pour transférer une partie de l'énergie thermique dans l'air vicié qui est évacuée ou doit être évacuée provenant du lave-vaisselle à convoyeur (2) en tant que chaleur utile au liquide de rinçage final qui doit être pulvérisé dans l'au moins une zone de rinçage final (18),
dans lequel le procédé comprend en outre de préférence les étapes de procédé suivantes :
iii) un système de récupération de chaleur de l'air de séchage est utilisé pour transférer au moins une partie de l'énergie thermique dans l'air de séchage qui circule dans une zone de séchage (40) du lave-vaisselle à convoyeur (2) en tant que chaleur utile au liquide de rinçage final, qui doit être pulvérisé dans l'au moins une zone de rinçage final (18).
